(19) **Europäisches Patentamt / European Patent Office / Office européen des brevets**

(11) **EP 1 975 648 B1**

(12) **FASCICULE DE BREVET EUROPEEN**

(45) Date de publication et mention
de la délivrance du brevet:
**18.08.2010 Bulletin 2010/33**

(51) Int Cl.:
***G01W 1/00*** *(2006.01)*

(21) Numéro de dépôt: **08102866.4**

(22) Date de dépôt: **25.03.2008**

(54) **Procédé et dispositif de protection d'aéronef contre des turbulences en air clair**

Verfahren und Vorrichtung zum Schutz eines Luftfahrzeugs gegen Turbulenzen bei klarer Luft

Method and device for protecting aircraft against clear air turbulence

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **27.03.2007 FR 0702225**

(43) Date de publication de la demande:
**01.10.2008 Bulletin 2008/40**

(73) Titulaire: **THALES**
**92200 Neuilly sur Seine (FR)**

(72) Inventeurs:
• **Barny, Hervé**
**26000, VALENCE (FR)**
• **Lehureau, Jean-Claude**
**91700, SAINTE GENEVIEVE DES BOIS (FR)**
• **Feneyrou, Patrick**
**91430, IGNY (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2003 009 268 US-B1- 6 237 405**

• **JOHN L. KELLER: "Clear Air Turbulence as a Response to Meso- and Synoptic-Scale Dynamic Process" MONTHLY WEATHER REVIEW, vol. 118, 1990, pages 2228-2248, XP002461885**
• **MICHAEL J. OARD: "Application of a Diagnostic Richardson Number Tendency to a Case Study of Clear Air Turbulence" JOURNAL OF APPLIED METEOROLOGY, vol. 13, no. 7, octobre 1974 (1974-10), pages 771-777, XP008086754**
• **EDWARD V BROWELL ET AL: "Airborne LIDAR systems" LASER REMOTE SENSING, 2005, pages 723-779, XP008086748**
• **FRANCESC ROCADENBOSCH: "Lidar - Wind, Raman, and other Sensing" ENCYCLOPEDIA OF OPTICAL ENGINEERING, vol. 2, 2003, pages 1113-1117, XP008086746**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

Le domaine de l'invention est celui de la protection des aéronefs en vol contre les turbulences en ciel clair. L'invention concerne un procédé de protection d'aéronef en vol contre des turbulences en air clair, elle présente un intérêt particulier pour la protection des avions de transport de passagers et plus spécifiquement les avions à bords desquels la circulation des passagers est favorisée. L'invention concerne également un dispositif de protection d'aéronef en vol contre les turbulences en air clair.

En vol, un aéronef peut traverser ou passer à proximité d'une zone de l'espace dans laquelle a lieu un phénomène de Turbulence en Air Clair, connus aussi sous l'acronyme TAC ou encore sous l'acronyme anglais CAT pour « Clear Air Turbulence ». Or, une turbulence peut avoir différentes conséquences dommageables sur l'aéronef.

Parmi ces conséquences, la plus fréquente concerne des accidents corporels impliquant des personnes embarquées à bord des aéronefs : des passagers et/ou des membres d'équipage. Ces accidents sont causés par des variations brusques d'accélération ou des rotations inopinées de l'aéronef lorsqu'il traverse une zone dans laquelle a lieu une TAC. Ces variations d'accélération produisent, d'une part des chocs entre les personnes et des parois de l'aéronef, par exemple contre le plafond de la cabine passager lorsque les personnes ne sont pas attachées sur leur siège, et d'autre part, des percussions de personnes par des objets qui ne sont pas solidairement fixés à la structure de l'aéronef, par exemple des chariots de service. Entre 1981 et 1997, les grandes compagnies aériennes américaines ont rapporté plusieurs centaines d'accidents et le coût annuel correspondant est estimé entre 30 et 60 millions de Dollars américains.

Beaucoup plus rarement, un aéronef traversant une zone dans laquelle un phénomène TAC a lieu peut avoir sa structure endommagée par des vents violents qui règnent dans la zone.

Les TAC sont susceptibles d'avoir des conséquences d'une telle gravité que les phénomènes TAC sont actuellement considérées par les compagnies aériennes mondiales, comme faisant partie des dangers atmosphériques les plus préoccupants.

Par ailleurs, il est a prévoir que si aucune mesure de protection efficace n'est mise en oeuvre, le nombre d'accidents liés aux TAC va augmenter. Cet accroissement prévisible est lié à l'accroissement général du trafic aérien, à la mise en service d'avions gros porteurs, long courriers, à bord desquels les passagers sont susceptibles de circuler pour se distraire et enfin, à la mise en oeuvre de trajets aériens spécifiques à un vol donné, limitant les possibilité d'alerte de pilote à pilote en cas de détection de turbulence.

La turbulence se traduit par des variations locales brutales de vitesse et de direction du vent, qui sont à l'origine de mouvements désordonnés et non maîtrisés des avions. Le phénomène TAC est un type de turbulence présent en Air Clair, en général à altitude élevée, par opposition à une turbulence liée directement à la convection, cette dernière se caractérisant par l'apparition de nuages. Les mécanismes de création des TAC et leurs propriétés restent des sujets actuels d'étude car ces phénomènes ne sont pas totalement compris, en raison notamment du manque de données expérimentales. Toutefois, on distingue habituellement, trois catégories de turbulences, c'est le cas par exemple dans la circulaire AC120-88A de l'administration fédérale de l'aviation des Etats-Unis d'Amérique communément connue sous l'acronyme « FAA » :

- des turbulences liées à un phénomène convectif ;
- des turbulences liées à une onde de relief ;
- des turbulences liées à une instabilité de Kelvin-Helmholtz.

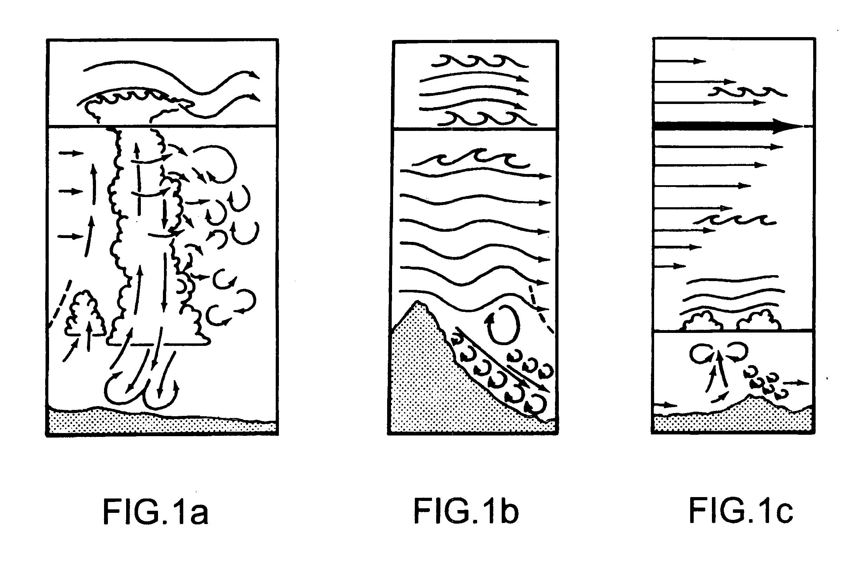

La première catégorie de turbulences se rencontre lors d'un développement de système orageux, par exemple un cumulonimbus, comme représenté sur la figure 1a. Ce développement peut être très rapide à l'échelle atmosphérique, et apparaît comme une impulsion génératrice d'oscillations en conditions d'atmosphère stable à haute altitude. Les oscillations peuvent se propager sur de très grandes distances, mais leur énergie variant comme l'inverse de leur distance de propagation, en principe seule la région proche de l'orage est perturbée. Toutefois, au-dessus du système orageux, il peut y avoir formation d'un effet de Venturi avec un jet-stream générant une atmosphère turbulente jusqu'à la tropopause en haute altitude, éventuellement à une distance importante du système orageux.

La deuxième catégorie de turbulences regroupe des phénomènes engendrés par un relief au sol, comme représenté sur la figure 1 b. Une onde de relief se traduit principalement par une zone turbulente sous-ondulatoire à des altitudes faibles à proximité du relief : en général des aéronefs effectuant des vols commerciaux ne sont pas touchés par cette onde de relief. A des altitudes supérieures, les couches d'atmosphère sont soumises à un phénomène ondulatoire stable dans lequel les vitesses verticales peuvent atteindre 5 à 15 mètres par seconde, avec une fréquence faible connue sous le nom de « fréquence de Brunt-Vaisala ». Ce phénomène a sur un aéronef des effets qui peuvent être facilement compensés par une action du pilote ou du pilote automatique de l'aéronef. Toutefois lorsque le relief est quasi-bidimensionnel, par exemple dans les massifs des Pyrénées, de la Sierra Nevada, ou des Andes, il peut se produire un rotor de haute altitude au-dessus du phénomène ondulatoire et en amont de la décompression qui entraîne de fortes turbulences. Ce phénomène ondulatoire est localisé sur une zone spatiale faiblement étendue, il est de forte intensité.

La troisième catégorie de turbulences regroupe des phénomènes engendrés par une instabilité connue sous le nom de « Kelvin-Hemholtz ». Comme représentée sur la figure 1c, cette instabilité peut se former en présence d'un gradient vertical de vent sous certaines conditions atmosphériques, elle peut s'assimiler à un cisaillement entre deux couches d'atmosphère, chacune des couches étant animée d'un mouvement horizontal, les deux mouvements horizontaux ayant un sens opposé. En général, ce type de phénomène ne donne pas lieu à la formation de nuages.

Dans la suite on désignera par « Turbulence en Air Clair » ou TAC un phénomène atmosphérique localisé sur une zone spatiale faiblement étendue, ayant une forte intensité pouvant être à l'origine de variations de vents verticaux supérieures à 3 mètres par seconde et n'étant pas détectable par une présence de nuages ou de précipitations. On l'a vu, les TAC peuvent faire partie de l'une des trois catégories de turbulences connues.

Pour protéger un aéronef, ses passagers et son équipage des conséquences de TAC, plusieurs scénarios opérationnels peuvent être envisagés :

- un évitement de la zone à risque, par modification de la trajectoire de l'avion ;
- un bouclage des ceintures et un arrimage des objets;
- une action sur les commandes de vol pour atténuer les conséquences de la turbulence sur l'avion.

L'évitement par l'aéronef de la zone à risque suppose une identification et une localisation d'une zone de turbulence avec un préavis suffisant pour re-planifier la trajectoire de l'aéronef, avec accord du contrôle aérien, soit typiquement 5 minutes au minimum.

Le bouclage des ceintures et l'arrimage des objets est la protection la plus efficace contre le danger lié aux TAC : les statistiques montrent que 98% des passagers blessés n'étaient pas attachés lors de l'incident. Pour qu'une telle mesure soit totalement efficace, la détection de la zone de turbulence doit être effectuée avec un préavis de l'ordre de 2 à 3 minutes. Un préavis plus court, c'est à dire de l'ordre de 30 secondes au minimum, peut permettre de prendre les premières mesures d'urgence.

Le préavis requis par une action sur les commandes de vol est beaucoup plus court : il est typiquement de l'ordre de 0,3 à 0,5 seconde. Toutefois, il faut dans ce cas détecter une présence de turbulence mais aussi identifier les vitesses d'un vent (horizontales et verticales) auxquelles l'aéronef va être confronté.

En résumé, pour un aéronef volant par exemple à une vitesse de 250 mètres par seconde, un préavis de 2 minutes nécessaire pour boucler des ceintures de tous les passagers et arrimer tous les objets, requiert d'identifier une présence de turbulence dans une zone éloignée de l'aéronef d'une distance de 30 kilomètres.

Les moyens actuels d'identification des zones à risque sont les suivants :

- des prévisions météorologiques, ou des observations de pilote ;
- des mesures par un radar météorologique de l'aéronef ;
- des mesures passives en bande infrarouge ou radiofréquences;
- des mesures actives optiques.

Des prévisions météorologiques sont disponibles, elles sont basées sur des calculs d'indices faisant intervenir une température et des vitesses de vent, ainsi que leurs gradients, à différentes altitudes. Ces prévisions ont une qualité qui n'est pas suffisante pour détecter une présence de TAC notamment en terme de leur résolution spatiale : en effet, la maille élémentaire des modèles numériques de l'atmosphère employés, de l'ordre de quelques kilomètres horizontalement et de 1000 mètres verticalement, est très nettement supérieure aux dimensions spatiales des TAC. De plus, la résolution temporelle de ces modèles, typiquement de l'ordre de plusieurs heures, n'est pas suffisante par rapport à la rapidité d'évolution des turbulences. De même des observations, images satellites ou rapports de pilotes, ont une durée de validité trop courte pour permettre une protection efficace et fiable.

Une détection de présence de TAC fondée sur une mesure de réflectivité en bande X est possible uniquement en présence de précipitations liquides (pluie) ou solides (grêle). En air clair, l'écho est trop faible pour être exploitable et des radars météorologiques conventionnels ne permettent donc pas la détection de TAC. Récemment, de nouveaux radars météorologiques sont apparus qui mettent en oeuvre un balayage vertical automatique ou encore une prédiction de turbulence basée sur des caractéristiques d'un écho radar renvoyé par des zones à forte réflectivité, par exemple zones de précipitation. L'utilisation de ces nouvelles technologies peut permettre l'identification des turbulences liées à une activité convective de type orage mais restera inopérante dans les cas de turbulence liée à une onde de relief ou à une instabilité de Kelvin-Hemholtz.

Un radiomètre est un instrument qui permet de mesurer passivement une température d'un volume d'air en analysant des ondes électromagnétiques émises par ce volume d'air dans différentes fenêtres spectrales. Un tel instrument ne peut toutefois pas être employé pour détecter directement une signature thermique de la TAC, car d'une part, la résolution spatiale d'une telle méthode n'est pas suffisante, d'autre part, sa mise en oeuvre nécessite une calibration complexe.

US 6 237 405 décrit un tel système

Enfin, un LIDAR, acronyme anglais pour « LIght Detection and Ranging », est un dispositif de mesure similaire à un radar qui est fondé sur un emploi d'un rayonnement sonde appartenant au domaine de fréquence optique. En exploitant un décalage doppler d'un signal optique rétro-diffusé par un volume d'atmosphère, un LIDAR permet d'identifier un champ de vitesse air, par exemple devant l'aéronef. US 2003/0009268 décrit un tel système. En exploitant certaines propriétés spectrales du signal rétro-diffusé (raie Rayleigh), un LIDAR permet d'identifier une signature thermique de la TAC.

Toutefois, on se heurte à une difficulté technologique liée à la puissance des sources laser pouvant équiper un LIDAR susceptible d'être embarqué dans un aéronef. Cette difficulté technologique limite la portée de détection d'un LIDAR à une distance de l'ordre de 10 kilomètres, soit un préavis de l'ordre de 40 secondes pour un aéronef se déplaçant à une vitesse de croisière subsonique.

Le but de l'invention est de pallier cet inconvénient : il consiste à employer un LIDAR pour prévoir une présence de TAC plutôt que pour détecter directement une présence de TAC. Plus précisément, l'invention concerne un procédé de protection d'un aéronef en vol contre des turbulences en air clair, l'aéronef occupant une position P et se déplaçant horizontalement à une vitesse V, un plan $P_{H0}$ étant le plan horizontal passant par P, caractérisé en ce qu'il comporte les étapes suivantes :

- Réaliser au moins un couple d'évaluations de température de l'air $T_B$, $T_C$ en deux points B, C qui ont des positions symétriques par rapport au plan $P_{H0}$;
- Réaliser au moins un couple d'évaluations de vitesse horizontale de l'air $VH_B$, $VH_C$ aux deux points B, C ;
- Déterminer un gradient de température de l'air à partir du couple d'évaluations de températures de l'air $T_B$, $T_C$;
- Déterminer un gradient de vitesse horizontale de l'air à partir du couple d'évaluations de vitesse horizontale de l'air $VH_B$, $VH_C$;
- Déterminer un indice significatif d'une présence de turbulences en air clair à partir du gradient de température de l'air et du gradient de vitesse horizontale de l'air;
- Répéter les étapes précédentes ;
- Analyser une évolution temporelle de l'indice;
- Lorsque l'analyse de l'évolution temporelle de l'indice et une analyse de trajectoire de l'aéronef indiquent que l'aéronef va traverser une zone soumise à des turbulences en air clair, prendre au moins une mesure de sauvegarde de l'aéronef ;
- Lorsqu'une analyse temporelle de l'indice et une analyse de trajectoire de l'aéronef indiquent que l'aéronef va quitter une zone soumise à des turbulences en air clair, avertir un équipage de l'aéronef.

Un premier avantage de l'invention tient en ce qu'elle est fondée sur une méthode éprouvée d'évaluation de température de l'air et de vitesse de vent à courte distance pour prévoir une présence de TAC à grande distance.

Un deuxième avantage de l'invention tient dans ce que les évaluations de température d'air et de vitesse de vent peuvent être réalisées à haute fréquence et permettre une évaluation à haute fréquence de l'indice caractérisant une présence de TAC. La haute fréquence des évaluations rend possible une analyse temporelle des valeurs de l'indice qui fournit une prévision de présence de TAC.

L'invention concerne aussi un dispositif de protection d'un aéronef en vol contre des turbulences en air clair selon l'invention, caractérisé en ce qu'il comporte :

- un dispositif de mesure à sonde optique pour réaliser au moins un couple d'évaluations de température de l'air $T_B$, $T_C$ en deux points B, C qui ont des positions symétriques par rapport au plan $P_{H0}$, la position des points (B, C), est définie par rapport à la position P de l'aéronef;
- un dispositif de mesure à sonde optique pour réaliser au moins deux couples de mesures de projection de vitesse relative de l'air par rapport à l'aéronef ($VR_{BG}$, $VR_{BD}$), ($VR_{CG}$, $VR_{CD}$) en deux points de mesures ($B_G$, $B_D$), ($C_G$, $C_D$), respectivement sur un axe de mesure reliant P à chaque point de mesure secondaires, les points de mesures ($B_G$, $B_D$), ($C_G$, $C_D$), appartiennent a un plan horizontal passant par le point B, C, les points de mesures ($B_G$, $B_D$), ($C_G$, $C_D$) ont des positions symétriques par rapport au point B, C et sont équidistants de P ;
- des moyens pour combiner les couples de mesures de projection de vitesse ($VR_{BG}$, $VR_{BD}$), ($VR_{CG}$, $VR_{CD}$) pour évaluer la vitesse horizontale de l'air $VH_B$, $VH_C$ au point B, C ;
- des moyens pour déterminer un gradient de température de l'air à partir d'un couple d'évaluations de température de l'air $T_B$, $T_C$;
- des moyens pour déterminer un gradient de vitesse horizontale de l'air à partir d'un couple d'évaluations de vitesse horizontale de l'air $VH_B$, $VH_C$ aux points B, C ;
- des moyens pour déterminer un indice significatif d'une présence de turbulences en air clair à partir du gradient de température de l'air et du gradient de vitesse horizontale de l'air;
- des moyens pour analyser une évolution temporelle d'un indice ;
- des moyens pour déterminer si l'aéronef va pénétrer dans une zone soumise à des turbulences en air clair ;
- des moyens pour prendre une mesure de sauvegarde de l'aéronef, lorsque l'aéronef va pénétrer dans une zone soumise à des turbulences en air clair.
- des moyens pour déterminer si l'aéronef va quitter la zone soumise à des turbulences en air clair ;
- des moyens pour avertir un équipage de l'aéronef, lorsque l'aéronef va quitter dans une zone soumise à des turbulences en air clair.

Un avantage du dispositif selon l'invention réside dans ce qu'il met en oeuvre un dispositif de mesure à sonde optique éprouvé pour réaliser des mesures de température de volumes d'air et de vitesse de volume d'air à courte distance ainsi que des moyens d'analyse simples et peu onéreux pour réaliser une analyse temporelle de l'évolution des valeurs de l'indice.

Un deuxième avantage du dispositif selon l'invention est de fournir des évaluations de température d'air ainsi que des évaluations de vitesse horizontale de volume d'air à haute cadence permettant de prévoir qu'un aéronef va traverser une zone de l'espace dans laquelle a lieu un phénomène de TAC avec un prévis suffisant pour que des mesures de protection efficaces de l'aéronef soient prises.

D'autres caractéristiques et avantages de l'invention apparaîtront à la lecture de la description détaillée qui suit, faite à titre d'exemple non limitatif et en référence aux dessins annexés dans lesquels :

- la figure 1a, 1b, 1c, déjà décrites, représentent respectivement une des catégories de turbulences en air clair ;
- les figures 2a, 2b, 2c représentent en vue latérale trois étapes de formation d'une turbulence en air clair de type « Kelvin-Hemholtz » ;
- la figures 3 représente, en vue perspective, des positions relatives de l'aéronef et de points B, C en lesquels sont évaluées des températures et vitesses horizontale.

D'une figure à l'autre, les mêmes éléments sont repérés par les mêmes références.

En présence d'un gradient de vent horizontal entre deux couches d'air et dans certaines conditions atmosphériques, il peut se former un phénomène d'instabilité de Kelvin-Hemholtz qui se caractérise par une apparition locale d'un écart de vitesses verticales $V_z$ et d'une variation de températures entre ces deux couches conduisant à la formation d'un rouleau. L'écart de vitesses verticales peut être à l'origine de modification temporaires d'angle d'incidence d'un aéronef influant sur la portance de l'aéronef.

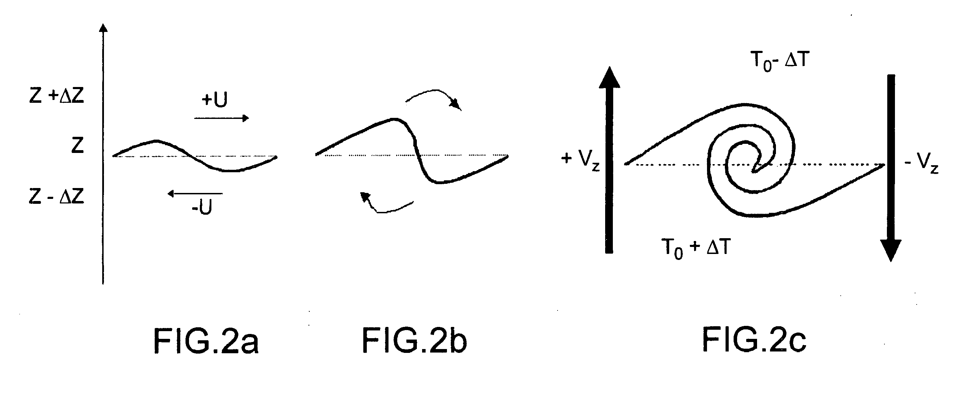

Les figure 2a, 2b et 2c représentent à trois instants successifs une formation de turbulence en air clair.

Un indice évaluant un ratio entre une énergie cinétique et une énergie potentielle de couches stratifiées horizontalement permet de mettre en évidence une turbulence en air clair à partir d'une carte de gradient de température d'une carte de gradient de vitesse de l'air.

Le nombre de Richardson $R_i$ est un tel indice : son expression est la suivante :

$$R_i = g \frac{\frac{d\theta_p}{dz}}{\theta_p \left(\frac{dU}{dz}\right)^2} = \frac{N^2}{\left(\frac{dU}{dz}\right)^2}$$

où :

$\theta_p = T(P_0/P)^k$ est une température potentielle, c'est à dire constante le long d'une adiabatique, et N est la pulsation de Brunt-Vaisala. La constante k désigne, dans l'expression précédente la valeur k = 2/7.

$\frac{d\theta_p}{dz}$ est un gradient vertical de température potentielle d'air ;

$\frac{dU}{dz}$ est un gradient vertical de vitesse horizontale d'air ;

g est la valeur de l'accélération de la gravité.

Avantageusement, l'indice est un nombre de Richardson.

En général, on estime que lorsque $R_i$ prend une valeur inférieure à 0,25 le ratio d'énergie cinétique et d'énergie potentielle de couches est suffisant pour vaincre la stabilité thermique de l'atmosphère : un rouleau se forme alors comme représenté sur la figure 2c.

L'évaluation d'un tel indice est réalisée en évaluant un ratio entre un gradient vertical de températures potentielles de deux couches d'air d'altitudes différentes et un gradient vertical de vitesse horizontales d'air de ces deux couches d'air.

Considérons le plan $P_{H0}$ qui est un plan horizontal passant par la position P de l'aéronef.

Le gradient vertical de températures potentielles et le gradient vertical de vitesse horizontales d'air peuvent être eux-mêmes évalués au moyen d'un dispositif de mesure à sonde optique réalisant des évaluations de température de l'air et des évaluations de vitesse horizontales de l'air dans des volumes d'air localisés autour d'au moins deux points B et C. Les positions des points B et C sont définie par rapport à la position P de l'aéronef, et sont symétriques par rapport au plan $P_{H0}$.

Avantageusement, les points B, C sont séparés par une distance 2.H qui est supérieure à 50 mètres..

Avantageusement, les points B, C sont séparés de la position P de l'aéronef d'une distance D qui est inférieure à 2 kilomètres.

Une mesure en un point M de l'espace est une mesure réalisée dans un volume centré sur le point M de l'espace.

Avantageusement, le volume de mesure a une dimension longitudinale inférieure à 50 mètres.

Avantageusement, le volume de mesure a une dimension latérale inférieure à 50 mètres.

Avantageusement, le volume de mesure a une dimension verticale inférieure à 50 mètres.

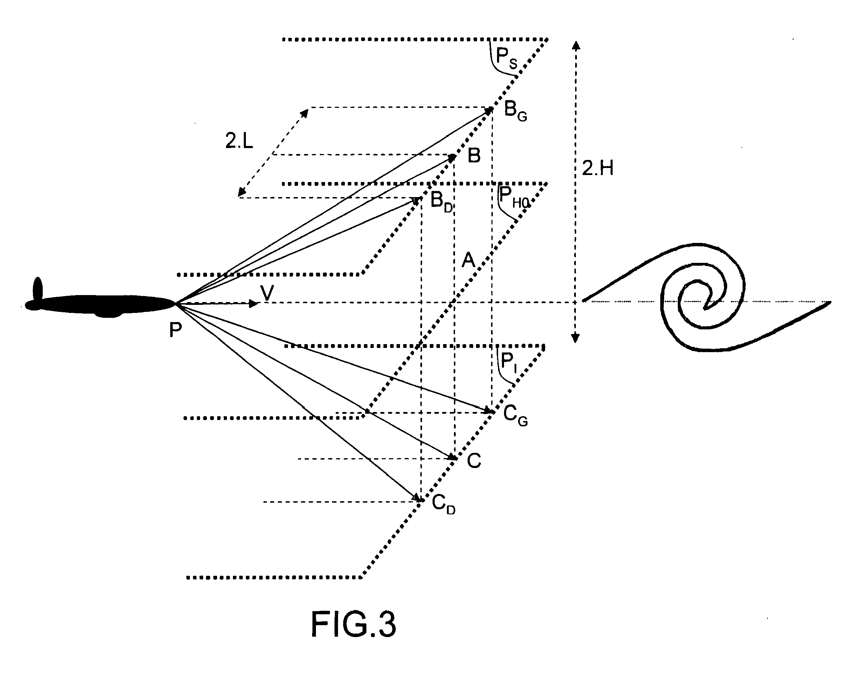

Sur la figure 3, on représente en vue perspective une disposition des points de mesures B et C.

Le plan $P_{H0}$ est le plan horizontal passant par la position P de l'aéronef.

Avantageusement, l'évaluation de la vitesse horizontale de l'air $VH_B$, $VH_C$ en un point B, C appartenant au plan $P_{H0}$ comporte les étapes suivantes :

- Réaliser au moins un couple de mesures de projection de vitesse relative de l'air par rapport à l'aéronef $(VR_{BG}, VR_{BD})$, $(VR_{CG}, VR_{CD})$ en deux points de mesures $(B_G, B_D)$, $(C_G, C_D)$, respectivement sur un axe de mesure reliant P à chaque point de mesure secondaires, les points de mesures $(B_G, B_D)$, $(C_G, C_D)$, appartiennent a un plan horizontal passant par le point B, C, les points de mesures $(B_G, B_D)$, $(C_G, C_D)$ ont des positions symétriques par rapport au point B, C, et sont équidistants de P;
- Combiner les mesures de projection de vitesse $(VR_{BG}, VR_{BD})$, $(VR_{CG}, VR_{CD})$ du couple pour évaluer la vitesse horizontale de l'air $VH_B$, $VH_C$ au point B, C.

Avantageusement, les points de mesure $(B_G, B_D)$, $(C_G, C_D)$ sont séparés par une distance 2.L qui est supérieure à 50 mètres.

Avantageusement, l'évaluation d'une température de l'air de l'air $T_B$, $T_C$ en un point B, C appartenant au plan $P_{H0}$ comporte les étapes suivantes :

- Réaliser au moins un couple de mesures de température $(T_{BG}, T_{BD})$, $(T_{CG}, T_{CD})$ en deux points de mesures $(B_G, B_D)$, $(C_G, C_D)$, les points de mesures $(B_G, B_D)$, $(C_G, C_D)$, appartiennent à un plan horizontal passant par le point B, C, les points de mesures $(B_G, B_D)$, $(C_G, C_D)$ ont des positions symétriques par rapport au point B, C, et sont équidistants de P;
- Combiner les mesures de température $(T_{BG}, T_{BD})$, $(T_{CG}, T_{CD})$ du couple pour évaluer la température de l'air $T_B$, $T_C$ au point B, C.

De manière à assurer une détection de turbulence à toute altitude, une détection doit se fonder sur des caractéristiques de molécules d'air et non sur des caractéristiques de particules d'aérosols. En effet, à une altitude à laquelle des aéronefs se déplacent en régime de croisière, des fluctuations de concentration de particules d'aérosols peuvent être importantes. Cette considération conduit à utiliser un dispositif de mesure à sonde optique fonctionnant avec un rayonnement sonde ayant une longueur d'onde réduite pour bénéficier d'une section efficace de rétro-diffusion importante.

Avantageusement, le dispositif de mesure par sonde optique émet un rayonnement de longueur d'onde appartenant au domaine ultra-violet.

Par exemple, une longueur d'onde égale à 355 nanomètres permet de concilier des contraintes dictées par une nécessaire transmission dans l'atmosphère et des considérations de sécurité oculaire.

Avantageusement, le dispositif de mesure par sonde optique est un LIDAR incohérent.

Une première analyse temporelle de la valeur de l'indice consiste à détecter un passage de l'indice par un seuil prédéfini $S_1$. Par exemple, lorsque l'indice est le nombre de Richardson, le seuil $S_1$ est égal à 0,25.

Une autre analyse temporelle de valeur de l'indice consiste à détecter un dépassement d'un seuil de vitesse de décroissance de l'indice. Par exemple, lorsque l'indice est le nombre de Richardson, on détermine une présence de turbulence à partir d'une détection d'une valeur de dérivée temporelle d'indice passant sous un seuil prédéfini $S_2$.

Selon qu'une détection de présence d'une turbulence se produit suffisamment tôt différentes mesures de sauvegarde de l'aéronef peuvent être prises.

Avantageusement, un évitement de la zone soumise à des turbulences en air clair est une mesure de sauvegarde de l'aéronef.

Avantageusement, un bouclage de ceintures des passagers de l'aéronef conjointement à d'un arrimage des objets mobiles équipant l'aéronef est une mesure de sauvegarde de l'aéronef.

Avantageusement, dispositif de mesure à sonde optique exploite une détection d'un effet Rayleigh sur un faisceau sonde pour réaliser des évaluations de température d'air.

Avantageusement, dispositif de mesure à sonde optique exploite une détection d'un effet Raman sur un faisceau sonde pour réaliser des évaluations de température d'air.

Avantageusement, le dispositif de mesure à sonde optique exploite une mesure d'amplitude d'un pic de rétrodiffusion d'un faisceau sonde pour réaliser des évaluations de température d'air.

Avantageusement, le dispositif de mesure à sonde optique exploite une mesure de largeur spectrale d'un pic de rétrodiffusion d'un faisceau sonde pour réaliser des évaluations de température d'air.

Avantageusement, le dispositif de mesure à sonde optique exploite une mesure d'un décalage Doppler d'un faisceau sonde pour réaliser des mesures de projection de vitesse relative de l'air par rapport à un axe de mesure.

**Revendications**

1. Procédé de protection d'un aéronef en vol contre des turbulences en air clair, l'aéronef occupant une position P et se déplaçant horizontalement à une vitesse V, un plan $P_{H0}$ étant le plan horizontal passant par P, comportant les étapes suivantes :

    - Réaliser au moins un couple d'évaluations de température de l'air $T_B$, $T_C$ en deux points B, C qui ont des positions symétriques par rapport au plan $P_{H0}$;
    - Réaliser au moins un couple d'évaluations de vitesse horizontale de l'air $VH_B$, $VH_C$ aux deux points B, C ;

- Déterminer un gradient de température de l'air à partir du couple d'évaluations de températures de l'air $T_B$, $T_C$;
- Déterminer un gradient de vitesse horizontale de l'air à partir du couple d'évaluations de vitesse horizontale de l'air $VH_B$, $VH_C$;
- Déterminer un indice significatif d'une présence de turbulences en air clair à partir du gradient de température de l'air et du gradient de vitesse horizontale de l'air ;
- Répéter les étapes précédentes ;
- Analyser une évolution temporelle de l'indice ;
- Lorsque l'analyse de l'évolution temporelle de l'indice et une analyse de trajectoire de l'aéronef indiquent que l'aéronef va traverser une zone soumise à des turbulences en air clair, prendre au moins une mesure de sauvegarde de l'aéronef ;
- Lorsqu'une analyse temporelle de l'indice et une analyse de trajectoire de l'aéronef indiquent que l'aéronef va quitter une zone soumise à des turbulences en air clair, avertir un équipage de l'aéronef; **caractérisé en ce que**:
- Lesdites mesures de températures et de vitesses étant effectuées par un LIDAR.

2. Procédé selon la revendication 1, **caractérisé en ce que** l'évaluation de la vitesse horizontale de l'air $VH_B$, $VH_C$ en un point B, C appartenant au plan $P_{H0}$ comporte les étapes suivantes :

   - Réaliser au moins un couple de mesures de projection de vitesse relative de l'air par rapport à l'aéronef ($VR_{BG}$, $VR_{BD}$), ($VR_{CG}$, $VR_{CD}$) en deux points de mesures ($B_G$, $B_D$), ($C_G$, $C_D$), respectivement sur un axe de mesure reliant P à chaque point de mesure secondaires, les points de mesures ($B_G$, $B_D$), ($C_G$, $C_D$), appartenant à un plan horizontal passant par le point B, C, les points de mesures ($B_G$, $B_D$), ($C_G$, $C_D$) ayant des positions symétriques par rapport au point B, C, et étant équidistants de P;
   - Combiner les mesures de projection de vitesse ($VR_{BG}$, $VR_{BD}$), ($VR_{CG}$, $VR_{CD}$) du couple pour évaluer la vitesse horizontale de l'air $VH_B$, $VH_C$ au point B, C.

3. Procédé selon la revendication 2, **caractérisé en ce que** les points de mesure ($B_G$, $B_D$), ($C_G$, $C_D$) sont séparés par une distance 2.L qui est supérieure à 50 mètres.

4. Procédé selon l'une des revendications 1 à 3, **caractérisé en ce que** l'évaluation d'une température de l'air de l'air $T_B$, $T_C$ en un point B, C appartenant au plan $P_{H0}$ comporte les étapes suivantes :

   - Réaliser au moins un couple de mesures de température ($T_{BG}$, $T_{BD}$), ($T_{CG}$, $T_{CD}$) en deux points de mesures ($B_G$, $B_D$), ($C_G$, $C_D$), les points de mesures ($B_G$, $B_D$), ($C_G$, $C_D$), appartenant à un plan horizontal passant par le point B, C, les points de mesures ($B_G$, $B_D$), ($C_G$, $C_D$) ayant des positions symétriques par rapport au point B, C, et étant équidistants de P;
   - Combiner les mesures de température ($T_{BG}$, $T_{BD}$), ($T_{CG}$, $T_{CD}$) du couple pour évaluer la température de l'air $T_B$, $T_C$ au point B, C.

5. Procédé selon l'une des revendications 1 à 4, **caractérisé en ce que** l'indice est un nombre de Richardson.

6. Procédé selon l'une des revendications 1 à 5, **caractérisé en ce que** les points B, C sont séparés par une distance 2.H qui est supérieure à 50 mètres.

7. Procédé selon l'une des revendications 1 à 6, **caractérisé en ce que** les points B, C sont séparés de la position P de l'aéronef d'une distance D qui est inférieure à 2 kilomètres.

8. Procédé selon l'une des revendications 1 à 7, une mesure en un point M de l'espace étant une mesure dans un volume centré sur le point M de l'espace, **caractérisé en ce que** le volume de mesure a une dimension longitudinale inférieure à 50 mètres.

9. Procédé selon l'une des revendications 1 à 7, une mesure en un point M de l'espace étant une mesure dans un volume centré sur le point M de l'espace, **caractérisé en ce que** le volume de mesure a une dimension latérale inférieure à 50 mètres.

10. Procédé selon l'une des revendications 1 à 7, une mesure en un point M de l'espace étant une mesure dans un volume centré sur le point M de l'espace, **caractérisé en ce que** le volume de mesure a une dimension verticale inférieure à 50 mètres.

11. Procédé selon l'une des revendications 1 à 10, **caractérisé en ce qu'**un évitement de la zone soumise à des turbulences en air clair est une mesure de sauvegarde de l'aéronef.

12. Procédé selon l'une des revendications 1 à 10, **caractérisé en ce qu'**un bouclage de ceintures des passagers de l'aéronef conjointement à d'un arrimage des objets mobiles équipant l'aéronef est une mesure de sauvegarde de l'aéronef.

13. Dispositif de protection d'un aéronef en vol contre des turbulences en air clair apte à mettre en oeuvre un procédé selon l'une des revendications précédentes, comportant :

- un dispositif de mesure à sonde optique pour réaliser au moins un couple d'évaluations de température de l'air $T_B$, $T_C$ en deux points B, C qui ont des positions symétriques par rapport au plan $P_{H0}$, la position des points (B, C), étant définie par rapport à la position P de l'aéronef, et pour réaliser au moins deux couples de mesures de projection de vitesse relative de l'air par rapport à l'aéronef ($VR_{BG}$, $VR_{BD}$), ($VR_{CG}$, $VR_{CD}$) en deux points de mesures ($B_G$, $B_D$), ($C_G$, $C_D$), respectivement sur un axe de mesure reliant P à chaque point de mesure secondaires, les points de mesures ($B_G$, $B_D$), ($C_G$, $C_D$), appartenant à un plan horizontal passant par le point B, C, les points de mesures ($B_G$, $B_D$), ($C_G$, $C_D$) ayant des positions symétriques par rapport au point B, C et étant équidistants de P ;

- des moyens pour combiner les couples de mesures de projection de vitesse ($VR_{BG}$, $VR_{BD}$), ($VR_{CG}$, $VR_{CD}$) pour évaluer la vitesse horizontale de l'air $VH_B$, $VH_C$ au point B, C ;

- des moyens pour déterminer un gradient de température de l'air à partir d'un couple d'évaluations de température de l'air $T_B$, $T_C$;

- des moyens pour déterminer un gradient de vitesse horizontale de l'air à partir d'un couple d'évaluations de vitesse horizontale de l'air $VH_B$, $VH_C$ aux points B, C ;

- des moyens pour déterminer un indice significatif d'une présence de turbulences en air clair à partir du gradient de température de l'air et du gradient de vitesse horizontale de l'air;

- des moyens pour analyser une évolution temporelle d'un indice ;

- des moyens pour déterminer si l'aéronef va pénétrer dans une zone soumise à des turbulences en air clair ;

- des moyens pour prendre une mesure de sauvegarde de l'aéronef, lorsque l'aéronef va pénétrer dans une zone soumise à des turbulences en air clair.

- des moyens pour déterminer si l'aéronef va quitter la zone soumise à des turbulences en air clair;

- des moyens pour avertir un équipage de l'aéronef, lorsque l'aéronef va quitter dans une zone soumise à des turbulences en air clair, **caractérisé en ce que** le dispositif de mesure à sonde optique est un LIDAR.

14. Dispositif selon la revendication 13, **caractérisé en ce que** le LIDAR émet un rayonnement de longueur d'onde appartenant au domaine ultra-violet.

15. Dispositif selon l'une des revendications 13 à 14, **caractérisé en ce que** le LIDAR est un LIDAR incohérent.

16. Procédé **caractérisé en ce que** le dispositif de mesure selon l'une des revendications 13 à 15 à LIDAR exploite une mesure de largeur spectrale d'un pic de rétrodiffusion d'un faisceau sonde pour réaliser des évaluations de température d'air.

17. Procédé selon la revendication 16, **caractérisé en ce que** le LIDAR exploite une mesure d'amplitude d'un pic de rétrodiffusion d'un faisceau sonde pour réaliser des évaluations de température d'air.

18. Procédé selon l'une des revendications 16 ou 17, **caractérisé en ce que** LIDAR exploite une détection d'un effet Raman sur un faisceau sonde pour réaliser des évaluations de température d'air.

19. Procédé selon l'une des revendications 16 à 18, **caractérisé en ce que** le LIDAR exploite une détection d'un effet Rayleigh sur un faisceau sonde pour réaliser des évaluations de température d'air.

20. Procédé selon l'une des revendications 16 à 19, **caractérisé en ce que** le LIDAR exploite une mesure d'un décalage Doppler d'un faisceau sonde pour réaliser des mesures de projection de vitesse relative de l'air par rapport à un axe de mesure.

**Claims**

1.  A process for protecting an aircraft in flight against clear air turbulence, the aircraft occupying a position P and moving horizontally at a speed V, a plane $P_{H0}$ being the horizontal plane passing through P, including the following steps:

    - performing at least one pair of evaluations of the air temperature $T_B$, $T_C$ at two points B, C which have symmetrical positions relative to the plane $P_{H0}$;
    - performing at least one pair of evaluations of horizontal air speed $VH_B$, $VH_C$ at the two points B, C;
    - determining an air temperature gradient from the pair of evaluations of the air temperature $T_B$, $T_C$;
    - determining a gradient of the horizontal air speed from the pair of evaluations of the horizontal air speed $VH_B$, $VH_C$;
    - determining an index signifying the presence of clear air turbulence from the air temperature gradient and the horizontal airspeed gradient;
    - repeating the previous steps;
    - analysing the temporal behaviour of the index;
    - taking at least one aircraft safety measure when the analysis of the temporal behaviour of the index and an analysis of the aircraft trajectory indicates that the aircraft will pass through a zone subject to clear air turbulence;
- warning the aircrew when an analysis of the temporal behaviour of the index and an analysis of the aircraft trajectory indicates that the aircraft will leave a zone subject to clear air turbulence; **characterised in that**:
- said temperature and speed measurements are performed by a LIDAR.

2. The process according to claim 1, **characterised in that** the evaluation of the horizontal airspeed $VH_B$, $VH_C$ at the points B, C on the plane $P_{H0}$ includes the following steps:

- performing at least one pair of relative airspeed projection measurements relative to the aircraft $(VR_{BG}, VR_{BD})$, $(VR_{CG}, VR_{CD})$ at two measurement points $(B_G, B_D)$, $(C_G, C_D)$, respectively on an axis of measurement connecting P to each secondary measurement point, the measurement points $(B_G, B_D)$, $(C_G, C_D)$ being on a horizontal plane passing through points B, C, the measurement points $(B_G, B_D)$, $(C_G, C_D)$ having symmetrical positions relative to points B, C, and being equidistant from P;
- combining the speed projection measurements $(VR_{BG}, VR_{BD})$, $(VR_{CG}, VR_{CD})$ of the pair for evaluating the horizontal airspeed $VH_B$, $VH_C$ at points B, C.

3. The process according to claim 2, **characterised in that** the measurement points $(B_G, B_D)$, $(C_G, C_D)$ are separated by a distance 2.L of more than 50 metres.

4. The process according to any one of claims 1 to 3, **characterised in that** the evaluation of the air temperature $T_B$, $T_C$ at the points B, C on the plane $P_{H0}$ includes the following steps:

- performing at least one pair of temperature measurements $(T_{BG}, T_{BD})$, $(T_{CG}, T_{CD})$ at two measurement points $(B_G, B_D)$, $(C_G, C_D)$, the measurement points $(B_G, B_D)$, $(C_G, C_D)$ being on a horizontal plane passing through points B, C, the measurement points $(B_G, B_D)$, $(C_G, C_D)$, having symmetrical positions relative to points B, C and being equidistant from P;
- combining the temperature measurements $(T_{BG}, T_{BD})$, $(T_{CG}, T_{CD})$ of the pair to evaluate the air temperature $T_B$, Tc at points B, C.

5. The process according to any one of claims 1 to 4, **characterised in that** the index is a Richardson number.

6. The process according to any one of claims 1 to 5, **characterised in that** the points B, C are separated by a distance 2.H of more than 50 metres.

7. The process according to any one of claims 1 to 6, **characterised in that** the points B, C are separated from position P of the aircraft by a distance D of less than 2 kilometres.

8. The process according to any one of claims 1 to 7, a measurement at a point M in the space being a measurement in a volume centred on the point M in the space, **characterised in that** the measurement volume has a longitudinal dimension of less than 50 metres.

9. The process according to any one of claims 1 to 7, a measurement at a point M in the space being a measurement in a volume centred on the point M in the space, **characterised in that** the measurement volume has a lateral dimension of less than 50 metres.

10. The process according to any one of claims 1 to 7, a measurement at a point M in the space being a measurement in a volume centred on the point M in the space, **characterised in that** the measurement volume has a vertical dimension of less than 50 metres.

11. The process according to any one of claims 1 to 10, **characterised in that** avoidance of the zone subject to clear air turbulence is an aircraft safety measure.

12. The process according to any one of claims 1 to 10, **characterised in that** buckling aircraft passenger seatbelts together with stowing loose objects onboard the aircraft is a safety measure of the aircraft.

13. A device for protecting an aircraft in flight against clear air turbulence capable of implementing a process according to any one of the previous claims, including:

- an optical probe measuring device for performing at least one pair of evaluations of the air temperature $T_B$, $T_C$ at two points B, C which have symmetrical positions relative to the plane $P_{H0}$, the position of points (B, C) being defined relative to the position P of the aircraft, and for performing at least two pairs of relative airspeed projection measurements in relation to the aircraft $(VR_{BG}, VR_{BD})$, $(VR_{CG}, VR_{CD})$ at two measurement points $(B_G, B_D)$, $(C_G, C_D)$, respectively on an axis of measurement connecting P to each secondary measurement point, the measurement points $(B_G, B_D)$, $(C_G, C_D)$ being on a horizontal plane through points B, C, the measurement points $(B_G, B_D)$, $(C_G, C_D)$ having symmetrical positions relative to points B, C, and being equidistant from P;
- means for combining the speed projection measurement pairs ($VR_{BG}$, $VR_{BD}$), ($VR_{CG}$, $VR_{CD}$) to evaluate the horizontal airspeed $VH_B$, $VH_C$ at points B, C;
- means for determining an air temperature gradient from the pair of evaluations of the air temperature $T_B$, $T_C$;
- means for determining a gradient of the horizontal air speed from the pair of evaluations of the horizontal air speed $VH_B$, $VH_C$ at points B, C;
- means for determining an index signifying the presence of clear air turbulence from the air temperature gradient and the horizontal airspeed gradient;
- means for analysing the temporal behaviour of an index;
- means for determining if the aircraft will enter a zone subject to clear air turbulence;
- means for taking an aircraft safety measure when the aircraft will enter a zone subject to clear air turbulence;
- means for determining if the aircraft will leave the zone subject to clear air turbulence;
- means for warning the aircrew when the aircraft will leave a zone subject to clear air turbulence, **characterised in that** the optical probe measuring device is a LIDAR.

14. The device according to claim 13, **characterised in that** the LIDAR emits radiation having a wavelength belonging to the ultraviolet field.

15. The device according to any one of claims 13 to 14, **characterised in that** the LIDAR is an incoherent LIDAR.

16. A process **characterised in that** the LIDAR measuring device according to any one of claims 13 to 15 uses a measurement of the spectral width of a backscatter peak of a probe beam to perform air temperature evaluations.

17. The process according to claim 16, **characterised in that** the LIDAR uses an amplitude measurement of a backscatter peak of a probe beam to perform air temperature evaluations.

18. The process according to any one of claims 16 or 17, **characterised in that** the LIDAR uses a detection of a Raman effect on a probe beam to perform air temperature evaluations.

19. The process according to any one of claims 16 to 18, **characterised in that** the LIDAR uses a detection of a Rayleigh effect on a probe beam to perform air temperature evaluations.

20. The process according to any one of claims 16 to 19, **characterised in that** the LIDAR uses a measurement of a Doppler shift of a probe beam to perform relative airspeed projection measurements relative to an axis of measurement.

**Patentansprüche**

1. Verfahren zum Schützen eines Luftfahrzeugs beim Flug gegen Turbulenzen in klarer Luft, wobei das Luftfahrzeug eine Position P einnimmt und sich horizontal mit einer Geschwindigkeit V bewegt, wobei eine Ebene $P_{H0}$ die Horizontalebene ist, die durch P verläuft, das die folgenden Schritte beinhaltet:

   - Durchführen von wenigstens einem Paar Temperaturerfassungen der Luft $T_B$, $T_C$ an zwei Punkten B, C, die symmetrische Positionen in Bezug auf die Ebene $P_{H0}$ haben;
   - Durchführen von wenigstens einem Paar Erfassungen der horizontalen Geschwindigkeit der Luft $VH_B$, $VH_C$ an den zwei Punkten B, C;
   - Ermitteln eines Temperaturgradienten der Luft anhand des Paares von Temperaturerfassungen der Luft $T_B$, $T_C$;
   - Ermitteln eines Gradienten der horizontalen Geschwindigkeit der Luft anhand des Paares von Erfassungen der horizontalen Geschwindigkeit der Luft $VH_B$, $VH_C$;
   - Ermitteln eines kennzeichnenden Indexes für die Anwesenheit von Turbulenzen in klarer Luft anhand des Temperaturgradienten der Luft und des Gradienten der horizontalen Geschwindigkeit der Luft;
   - Wiederholen der obigen Schritte;
   - Analysieren einer zeitlichen Evolution des Indexes;
   - Ausführen, wenn die Analyse der zeitlichen Evolution des Indexes und eine Analyse der Flugbahn des Luftfahrzeugs anzeigen, dass das Luftfahrzeug eine Zone durchqueren wird, die Turbulenzen in klarer Luft erfährt, wenigstens einer Maßnahme zum Schützen des Luftfahrzeugs;
   - Benachrichtigen, wenn eine zeitliche Analyse des Indexes und eine Analyse der Flugbahn des Luftfahrzeugs anzeigen, dass das Luftfahrzeug eine Zone verlässt, die Turbulenzen in klarer Luft erfährt, der Besatzung des Luftfahrzeugs; **dadurch gekennzeichnet, dass**
   - die Messungen von Temperatur und Geschwindigkeit mit einem LIDAR durchgeführt werden.

2. Verfahren nach Anspruch 1, **dadurch gekennzeichnet, dass** die Erfassung der horizontalen Geschwindigkeit der Luft $VH_B$, $VH_C$ an den Punkten B, C, die zur Ebene $P_{H0}$ gehören, die folgenden Schritte beinhaltet:

- Durchführen von wenigstens einem Paar Projektionsmessungen der relativen Geschwindigkeit der Luft mit Bezug auf das Luftfahrzeug ($VR_{BG}$, $VR_{BD}$), ($VR_{CG}$, $VR_{CD}$) an jeweils zwei Messpunkten ($B_G$, $B_D$), ($C_G$, $C_D$) auf einer Messachse, die P mit jedem sekundären Messpunkt verbindet, wobei die Messpunkte ($B_G$, $B_D$), ($C_G$, $C_D$) zu einer horizontalen Ebene gehören, die die Punkte B, C durchquert, wobei die Messpunkte ($B_G$, $B_D$), ($C_G$, $C_D$) symmetrische Positionen in Bezug auf die Punkte B, C sind und den gleichen Abstand von P aufweisen;
- Kombinieren der Geschwindigkeitsprojektionsmessungen ($VR_{BG}$, $VR_{BD}$), ($VR_{CG}$, $VR_{CD}$) des Paares zum Erfassen der horizontalen Geschwindigkeit der Luft $VH_B$, $VH_C$ an den Punkten B, C.

3. Verfahren nach Anspruch 2, **dadurch gekennzeichnet, dass** die Messpunkte ($B_G$, $B_D$), ($C_G$, $C_D$) um eine Distanz 2.L voneinander getrennt sind, die größer als 50 Meter ist.

4. Verfahren nach einem der Ansprüche 1 bis 3, **dadurch gekennzeichnet, dass** die Erfassung einer Temperatur der Luft $T_B$, $T_C$ an Punkten B, C, die zur Ebene $P_{H0}$ gehören, die folgenden Schritte beinhaltet:

- Durchführen von wenigstens einem Paar Temperaturmessungen ($T_{BG}$, $T_{BD}$), ($T_{CG}$, $T_{CD}$) an zwei Messpunkten ($B_G$, $B_D$), ($C_G$, $C_D$), wobei die Messpunkte ($B_G$, $B_D$), ($C_G$, $C_D$) zu einer horizontalen Ebene gehören, die durch die Punkte B, C verläuft, wobei die Messpunkte ($B_G$, $B_D$), ($C_G$, $C_D$) symmetrische Positionen in Bezug auf den Punkt B, C sind und den gleichen Abstand von P haben;
- Kombinieren der Temperaturmesswerte ($T_{BG}$, $T_{BD}$), ($T_{CG}$, $T_{CD}$) des Paares zum Erfassen der Temperatur der Luft $T_B$, $T_C$ an den Punkten B, C.

5. Verfahren nach einem der Ansprüche 1 bis 4, **dadurch gekennzeichnet, dass** der Index eine Richardson-Zahl ist.

6. Verfahren nach einem der Ansprüche 1 bis 5, **dadurch gekennzeichnet, dass** die Punkte B, C um eine Distanz 2.H voneinander getrennt sind, die größer als 50 Meter ist.

7. Verfahren nach einem der Ansprüche 1 bis 6, **dadurch gekennzeichnet, dass** die Punkte B, C von der Position P des Luftfahrzeugs um eine Distanz D getrennt sind, die kleiner als 2 Kilometer ist.

8. Verfahren nach einem der Ansprüche 1 bis 7, wobei eine Messung an einem Punkt M des Raums eine Messung in einem Volumen ist, das auf dem Punkt M des Raums zentriert ist, **dadurch gekennzeichnet, dass** das Volumen der Messung eine Längsdimension von weniger als 50 Metern hat.

9. Verfahren nach einem der Ansprüche 1 bis 7, wobei eine Messung an einem Punkt M des Raums eine Messung in einem Volumen ist, das auf dem Punkt M des Raums zentriert ist, **dadurch gekennzeichnet, dass** das Messvolumen eine Seitendimension von weniger als 50 Metern hat.

10. Verfahren nach einem der Ansprüche 1 bis 7, wobei eine Messung an einem Punkt M des Raums eine Messung in einem Volumen ist, das auf dem Punkt M des Raums zentriert ist, **dadurch gekennzeichnet, dass** das Messvolumen eine Vertikaldimension von weniger als 50 Metern hat.

11. Verfahren nach einem der Ansprüche 1 bis 10, **dadurch gekennzeichnet, dass** ein Ausweichen der Zone, die Turbulenzen in klarer Luft erfährt, eine Schutzmaßnahme des Luftfahrzeugs ist.

12. Verfahren nach einem der Ansprüche 1 bis 10, **dadurch gekennzeichnet, dass** das Anlegen der Sicherheitsgurte der Passagiere des Luftfahrzeugs in Verbindung mit dem Befestigen von beweglichen Gegenständen in dem Luftfahrzeug eine Schutzmaßnahme des Luftfahrzeugs ist.

13. Vorrichtung zum Schützen eines Luftfahrzeugs im Flug gegen Turbulenzen in klarer Luft, die ein Verfahren nach einem der vorherigen Ansprüche ausführen kann und die Folgendes umfasst:

- eine Vorrichtung zum Messen mit einer optischen Sonde zum Durchführen von wenigstens einem Paar Temperaturerfassungen der Luft $T_B$, $T_C$ an zwei Punkten B, C, die symmetrische Positionen mit Bezug auf die Ebene $P_{H0}$ haben, wobei die Position der Punkte (B, C) relativ zur Position P des Luftfahrzeugs definiert wird, und zum Durchführen von wenigstens zwei Paaren von Projektionsmessungen der relativen Geschwindigkeit der Luft relativ zu dem Luftfahrzeug ($VR_{BG}$, $VR_{BD}$), ($VR_{CG}$, $VR_{CD}$) an jeweils zwei Messpunkten ($B_G$, $B_D$), ($C_G$, $C_D$) auf einer Messachse, die P mit jedem sekundären Messpunkt verbindet, wobei die Messpunkte ($B_G$, $B_D$), ($C_G$, $C_D$) zu einer horizontalen Ebene gehören, die durch die Punkte B, C verläuft, wobei die Messpunkte ($B_G$, $B_D$), ($C_G$, $C_D$) symmetrische Positionen relativ zu den Punkten B, C haben und den gleichen Abstand von P aufweisen;
- Mittel zum Kombinieren der Paare von Geschwindigkeitsprojektionsmessungen ($VR_{BG}$, $VR_{BD}$), ($VR_{CG}$, $VR_{CD}$) zum Erfassen der horizontalen Geschwindigkeit der Luft $VH_B$, $VH_C$ an den Punkten B, C;

- Mittel zum Ermitteln eines Temperaturgradienten der Luft anhand eines Paares von Temperaturerfasungen der Luft $T_B$, $T_C$ ;
- Mittel zum Ermitteln eines Gradienten der horizontalen Geschwindigkeit der Luft anhand eines Paares von Erfassungen der horizontalen Geschwindigkeit der Luft $VH_B$, $VH_C$ an den Punkten B, C;
- Mittel zum Ermitteln eines kennzeichnenden Indexes für die Anwesenheit von Turbulenzen in klarer Luft anhand des Temperaturgradienten der Luft und des Gradienten der horizontalen Geschwindigkeit der Luft;
- Mittel zum Analysieren einer zeitlichen Evolution eines Indexes;
- Mittel zum Ermitteln, ob das Luftfahrzeug in eine Zone eindringt, die Turbulenzen in klarer Luft erfährt;
- Mittel zum Ausführen einer Maßnehme zum Schützen des Luftfahrzeugs, wenn das Luftfahrzeug in eine Zone eindringt, die Turbulenzen in klarer Luft erfährt;
- Mittel zum Ermitteln, wenn das Luftfahrzeug die Zone verlässt, die Turbulenzen in klarer Luft erfährt;
- Mittel zum Benachrichtigen der Besatzung des Luftfahrzeugs, wenn das Luftfahrzeug eine Zone verlässt, die Turbulenzen in klarer Luft erfährt; **dadurch gekennzeichnet, dass** die Messvorrichtung mit optischer Sonde ein LIDAR ist.

14. Vorrichtung nach Anspruch 13, **dadurch gekennzeichnet, dass** das LIDAR Strahlen mit einer Wellenlänge emittiert, die zum ultravioletten Bereich gehört.

15. Vorrichtung nach einem der Ansprüche 13 bis 14, **dadurch gekennzeichnet, dass** das LIDAR ein inkohärentes LIDAR ist.

16. Verfahren, das **dadurch gekennzeichnet ist, dass** die Messvorrichtung nach einem der Ansprüche 13 bis 15 mit LIDAR eine Messung der Spektralbreite eines Retrodiffusions-Peak eines Sondenstrahls zum Durchführen der Lufttemperaturerfassungen verwendet.

17. Verfahren nach Anspruch 16, **dadurch gekennzeichnet, dass** das LIDAR eine Messung der Amplitude eines Retrodiffusions-Peak eines Sondenstrahls zum Durchführen der Lufttemperaturerfassungen verwendet.

18. Verfahren nach Anspruch 16 oder 17, **dadurch gekennzeichnet, dass** das LIDAR eine Detektion eines Raman-Effekts auf einen Sondenstrahl zum Durchführen der Lufttemperaturerfassungen verwendet.

19. Verfahren nach einem der Ansprüche 16 bis 18, **dadurch gekennzeichnet, dass** das LIDAR eine Detektion eines Rayleigh-Effekts auf einen Sondenstrahl zum Durchführen von Lufttemperaturerfassungen verwendet.

20. Verfahren nach einem der Ansprüche 16 bis 19, **dadurch gekennzeichnet, dass** das LIDAR eine Dopplerverschiebungsmessung eines Sondenstrahls zum Durchführen der Projektionsmessungen der relativen Geschwindigkeit der Luft in Bezug auf eine Messachse verwendet.

FIG.1a          FIG.1b          FIG.1c

EP 1 975 648 B1

FIG.2a    FIG.2b    FIG.2c

EP 1 975 648 B1

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6237405 B

- US 20030009268 A